# FASCICULE DE BREVET EUROPEEN

(11) **EP 3 200 971 B1**
(45) Date de publication et mention de la délivrance du brevet: **10.10.2018**
(21) Numéro de dépôt: 15770880.1
(22) Date de dépôt: 25.09.2015
(51) Int. Cl.: B29C 65/20, B29C 65/78, F21S 43/20, F21S 43/27

(54) **ASSEMBLAGE DE DEUX PIÈCES D'UN DISPOSITIF LUMINEUX PAR SOUDURE MIROIR VIA DES NERVURES ÉLARGISSEURS**
ZWEITEILIGE ANORDNUNG EINER BELEUCHTUNGSVORRICHTUNG DURCH SPIEGELSCHWEISSEN ÜBER EXPANDERRIPPEN
TWO-PART ASSEMBLY OF A LIGHTING DEVICE BY MIRROR WELDING VIA EXPANDER RIBS

(30) Priorité: 30.09.2014 FR 1459272
(43) Date de publication de la demande: 09.08.2017
(73) Titulaire: Valeo Vision, 93012 Bobigny Cedex (FR)
(72) Inventeur: ALTERMATT, Guillaume, F-49000 Angers (FR); COLOMBEL, Jean-Marc, F-49430 Les Rairies (FR); PAUGAM, Stéphane, F-49330 Etriche (FR); PRECHAIS, Jocelyn, F-49190 Denee (FR); TISSIER, Jean-Denis, F-89100 Saint Clement (FR)
(74) Mandataire: Schaffner, Jean
(86) Numéro de dépôt international: PCT/EP2015/072168
(87) Numéro de publication internationale: WO 2016/050652

(56) Documents cités:
- EP-A1- 2 065 166
- WO-A1-2014/046113
- JP-A- 2000 025 116
- JP-A- 2001 297 608
- US-A1- 2002 057 578
- US-A1- 2005 259 433
- US-A1- 2013 157 015

## Description

### Domaine technique de l'invention

L'invention concerne le domaine de l'assemblage entre elles par soudure miroir d'une première pièce et d'une deuxième pièce d'un dispositif lumineux pour véhicule automobile, comprenant la fourniture des première et deuxième pièces où chaque pièce comprend, dans sa zone d'interface de contact avec l'autre pièce, un cordon de soudure destiné à venir en contact contre le cordon de soudure de l'autre pièce durant la soudure miroir.

### État de la technique

Dans le domaine des véhicules automobiles, il est connu d'assembler par une opération de soudure miroir une glace au moins partiellement transparente à la lumière et un socle portant la glace et à fixer sur le véhicule. Par cet assemblage, il est constitué un dispositif lumineux tel qu'un dispositif de signalisation de véhicule automobile, par exemple un feu de signalisation arrière, ou bien encore un dispositif d'éclairage.

Les documents WO 2014/046113, US 2002/057578, US 2005/259433 ou JP 2001 297608 décrivent cette opération de soudure miroir.

Pour la mise en oeuvre de cette opération de soudure miroir de la glace avec le socle, il est classique de prévoir un cordon de soudure sur la glace et un cordon de soudure de forme complémentaire sur le socle. L'opération de soudure miroir consiste à positionner la glace et le socle l'un au-dessus de l'autre en laissant un espace d'environ 50 cm entre eux. Dans cet espace est introduit un élément chauffant allongé, dénommé miroir, qui chauffe sur ses deux faces opposées. Cet élément chauffant peut prendre différentes formes, selon l'outillage mis en oeuvre. Il peut être une lame métallique chauffante (en anglais, hot plate), une lame munie d'émetteurs infrarouges ou encore de microbuses diffusant un gaz chaud (en anglais, hot gas), par exemple de l'azote chaud. Les deux pièces viennent ensuite en contact avec le miroir (cas de la lame chauffante) ou bien sont placées à proximité du miroir (cas de l'infrarouge ou du gaz chaud) au niveau de leurs cordons de soudure jusqu'à ce que la température de la matière ait atteint sa température de ramollissement en surface. Lorsque les températures de ramollissement sont atteintes, il suffit de retirer le miroir chauffant et de mettre en contact sous pression la glace et le socle au niveau de leurs cordons de soudure encore à l'état ramolli pendant quelques secondes. Après quelques secondes de refroidissement sous pression, la soudure est réalisée. La glace et le socle sont liés l'un à l'autre au niveau de leurs cordons de soudure eux-mêmes solidarisés l'un à l'autre après leur refroidissement.

La technique actuelle de l'assemblage consiste à rendre manuellement le socle solidaire d'un outil supérieur tandis que la glace est posée manuellement sur un outil inférieur. Ensuite, une étape de rapprochement des outils supérieur et inférieur est mise en oeuvre durant la soudure miroir. Il est nécessaire de prévoir une étape de conformation de la pièce par l'intervention de l'opérateur.

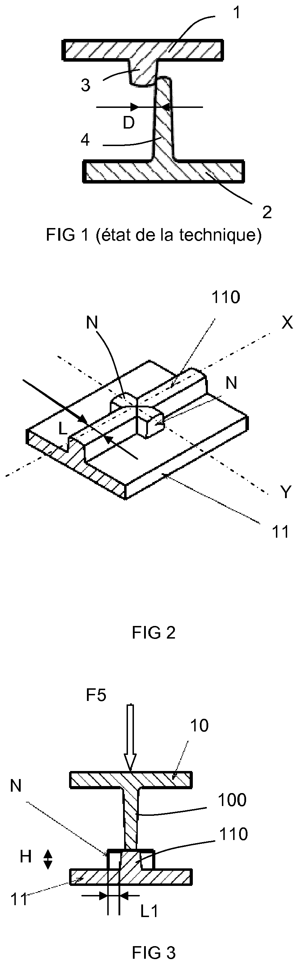

Un problème est que le socle est une pièce lourde et il en résulte un taux de fatigue élevé des opérateurs qui manipulent les socles et les glaces sur la ligne d'assemblage. De plus, la mise en place du socle dans l'outil supérieur est délicate compte tenu du poids et du manque d'accès. La conséquence est un risque de mauvais alignement des cordons de soudure de la glace et du socle au moment de la soudure miroir. En référence à la figure 1 qui représente une situation involontaire, un glissement relatif entre la glace 2 et le socle 1 au niveau de leurs cordons de soudure 4, 3 respectifs est susceptible d'apparaitre fortuitement, rompant la situation de parallélisme du socle 1 par rapport à la glace 2. Il en résulte un risque de casse de la glace 2 et/ou du socle 1, un risque d'une mauvaise soudure, voire fragile. Il peut même arriver de manière insatisfaisante que le socle 1 soit fixé à la glace 2 dans une position ne correspondant pas du tout à la position attendue, présentant un décalage repéré D ou une absence de parallélisme, impliquant un risque de mise au rebus pour non-conformité du dispositif lumineux.

JP 2000 025116 divulgue une méthode alternative pour aligner les cordons de soudure en vis-à-vis pendant les opérations de chauffage par miroir puis de pressage. Cette méthode utilise des outils de bridage spécifiques des corps creux à souder.

Bien que les problèmes présentés ci-dessus concernent particulièrement le domaine technique concerné par le couple constitué de la glace et du socle associé d'un dispositif lumineux, ces problèmes sont susceptibles d'apparaitre pour d'autres couples de pièces d'un dispositif lumineux pour véhicule automobile.

### Objet de l'invention

Le but de la présente invention est de proposer une solution d'assemblage par soudure miroir de deux pièces entre elles d'un dispositif lumineux pour véhicule automobile qui remédie aux inconvénients listés ci-dessus.

A cet égard, l'invention a pour objet un procédé d'assemblage entre elles par soudure miroir d'une première pièce et d'une deuxième pièce d'un dispositif lumineux pour véhicule automobile, comprenant une étape de fourniture des première et deuxième pièces où chaque pièce comprend, dans sa zone d'interface de contact avec l'autre pièce, un cordon de soudure destiné à venir en contact contre le cordon de soudure de l'autre pièce durant la soudure miroir.

Ce procédé est remarquable en ce que le cordon de soudure d'au moins l'une desdites première et deuxième pièces est muni d'une pluralité de nervures élargisseurs échelonnées le long de la longueur dudit cordon de soudure, chaque nervure élargisseur étant configurée de manière à élargir localement la largeur du cordon de soudure par rapport à la largeur du cordon de soudure en dehors des zones où les nervures élargisseurs sont présentes.

Selon un mode de réalisation avantageux, pour le cordon de soudure qui en est équipé, des nervures élargisseurs sont disposées de part et d'autre du cordon de soudure par rapport à sa direction d'extension.

En particulier, deux nervures élargisseurs sont agencées localement perpendiculairement ou en épi par rapport à la direction d'extension du cordon de soudure, dans l'alignement l'une de l'autre, de sorte à constituer un croisillon conjointement avec ledit cordon de soudure. Selon une variante de réalisation, deux nervures élargisseurs respectivement s'étendant d'un côté et de l'autre du cordon de soudure sont décalées entre elles le long de la longueur du cordon de soudure selon une organisation en quinconce.

Selon un mode de réalisation avantageux, chaque nervure élargisseur s'étend sur une longueur comprise entre 1,5 mm et 4 mm depuis le cordon de soudure.

Selon un mode de réalisation avantageux, la hauteur de chaque nervure élargisseur est supérieure ou égale à la hauteur du cordon de soudure, comptées depuis la face de la pièce à partir de laquelle la nervure élargisseur prend naissance.

En particulier et avantageusement, chaque nervure élargisseur est conformée de sorte que sa hauteur tend à augmenter en s'éloignant du cordon de soudure.

Selon un mode de réalisation du procédé, après l'étape de fourniture, ledit procédé comprend une première étape de mise en contact des première et deuxième pièces au niveau de leurs cordons de soudure, dans laquelle les nervures élargisseurs de chaque pièce qui en est équipée participent au positionnement du cordon de soudure de l'autre pièce et à la conformation spatiale de ladite autre pièce, puis une étape de soudure miroir des première pièce et deuxième pièce entre elles au niveau de leurs cordons de soudure et des nervures élargisseurs.

En particulier, durant la première étape de mise en contact, la pièce dont le cordon de soudure comprend les nervures élargisseurs est supportée par un outil inférieur et en ce que l'étape de soudure miroir comprend une étape de préhension de la pièce pré-centrée durant la première étape de mise en contact par un outil supérieur, le centrage et la conformation spatiale de ladite autre pièce étant obtenus par les nervures élargisseurs de la pièce dont le cordon de soudure en est équipé durant l'étape de préhension.

Selon une autre caractéristique particulière, la première étape de mise en contact comprend une étape de mise en place manuelle de ladite autre pièce sur la pièce dont le cordon de soudure est équipé de nervures élargisseurs.

Selon un mode de réalisation avantageux, l'étape de soudure miroir comprend, suite à l'étape de préhension, une étape de déplacement relatif entre les outils supérieur et inférieur de sorte à éloigner les première et deuxième pièces l'une de l'autre, une étape de ramollissement au moins partiel de chaque cordon de soudure des première et deuxième pièces par un miroir chauffant, puis une deuxième étape de mise en contact par pression des première et deuxième pièces au niveau de leurs cordons de soudure encore au moins partiellement ramollis.

Selon une caractéristique avantageuse, les première et deuxième pièces sont configurées pour former après la soudure miroir, un dispositif lumineux de type dispositif de signalisation de véhicule automobile, par exemple un feu de signalisation arrière, l'une des première et deuxième pièces, notamment la pièce dont le cordon de soudure est équipée des nervures élargisseurs, étant constituée par un socle, et l'autre des première et deuxième pièces étant constituée par une glace au moins partiellement transparente à la lumière.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 déjà décrite est une vue schématique, en coupe longitudinale, des problèmes risquant de subvenir avec les techniques d'assemblage actuelles,
- les figures 2 et 3 sont des vues respectivement en perspective et en coupe d'un exemple de pièce utilisée dans un exemple de procédé d'assemblage selon l'invention,
- la figure 4 illustre le glissement E1 des pièces qui peut être compensé grâce au procédé selon l'invention,
- les figures 5 à 8 représentent quatre étapes successives de mise en oeuvre de l'exemple de procédé d'assemblage selon l'invention.

### Description de modes préférentiels de l'invention

L'invention qui va maintenant être décrite en référence aux figures 2 à 8 annexées concerne globalement un procédé d'assemblage entre elles, par une technique de soudure miroir, d'une première pièce et d'une deuxième pièce 10, 11 appartenant à un dispositif lumineux pour véhicule automobile.

Le procédé comprend une étape de fourniture des première et deuxième pièces 10, 11 où chaque pièce 10, 11 comprend, dans sa zone d'interface de contact avec l'autre pièce, un cordon de soudure, respectivement 100, 110, destiné à venir en contact contre le cordon de soudure de l'autre pièce durant la soudure miroir.

L'opération de soudure miroir est aussi connue sous le nom de soudure par lame chauffante. Cette technique consiste à positionner les deux pièces 10, 11, qui sont préférentiellement formées dans une matière plastique idoine au moins dans la zone des cordons de soudure 100, 110, l'une au-dessus de l'autre en laissant un espace entre celles-ci, par exemple d'environ 50 cm. Ensuite, un miroir, par exemple une lame chauffante, qui chauffe sur deux côtés opposés est introduit dans cet espace. Les deux pièces 10, 11 viennent ensuite en contact avec le miroir ou sont placées à proximité de celui-ci (miroir avec infrarouge ou gaz chaud) au niveau des cordons de soudure 100, 110 jusqu'à ce que la température de la matière de chaque pièce 10, 11, au niveau du cordon de soudure 100, 110, ait atteint sa température de ramollissement en surface. Lorsque les températures de ramollissement sont atteintes, il suffit de retirer le miroir chauffant et de mettre en contact sous pression les deux pièces 10, 11 l'une avec l'autre au niveau de leurs cordons de soudure 100, 110 encore à l'état ramolli pendant quelques secondes. Après quelques secondes de refroidissement sous pression, la soudure est réalisée : les deux pièces 10, 11 sont liées l'une à l'autre au niveau de leurs cordons de soudure 100, 110, eux-mêmes solidarisés l'un à l'autre après leur refroidissement.

Selon une caractéristique importante, le cordon de soudure 110 d'au moins l'une des première et deuxième pièces 10, 11 (par exemple uniquement le cordon de soudure 110 de la deuxième pièce 11) est muni d'une pluralité de nervures élargisseurs N échelonnées le long de la longueur (comptée suivant sa longueur d'extension X suivant laquelle il s'étend) dudit cordon de soudure 110. Chaque nervure élargisseur N est configurée de manière à élargir localement la largeur du cordon de soudure 110 par rapport à la largeur L du cordon de soudure 110 en dehors des zones où les nervures élargisseurs N sont présentes (voir l'illustration sur la figure 2 par exemple).

Le dispositif lumineux obtenu par l'assemblage des pièces 10, 11 peut indifféremment être de type dispositif de signalisation de véhicule automobile, par exemple un feu de signalisation arrière, ou encore de type dispositif d'éclairage extérieur du véhicule automobile ou de type dispositif d'éclairage intérieur du véhicule automobile. Notamment mais non exclusivement, les première et deuxième pièces 10, 11 sont configurées pour former après la soudure miroir, un dispositif lumineux de type dispositif de signalisation de véhicule automobile, par exemple un feu de signalisation arrière, l'une 11 des première et deuxième pièces 10, 11, notamment la pièce 11 dont le cordon de soudure 110 est équipée des nervures élargisseurs N, étant constituée par un socle du dispositif de signalisation, et l'autre 10 des première et deuxième pièces 10, 11 étant constituée par une glace du dispositif de signalisation, au moins partiellement transparente à la lumière.

Dans la suite, il sera pris l'exemple avantageux où la pièce munie de nervures élargisseurs N est la deuxième pièce 11 et le cordon de soudure concerné est le cordon de soudure repéré 110. Toutefois, alternativement ou en combinaison, la pièce munie de nervures élargisseurs N peut être la première pièce 10 et le cordon de soudure concerné est dans ce cas le cordon de soudure repéré 100. Ainsi, les deux cordons de soudure 100, 110 des deux pièces 10, 11 peuvent simultanément être équipés de nervures élargisseurs, ou bien il peut être prévu qu'un seul des deux cordons de soudure 100, 110 soit équipé de telles nervures élargisseurs N.

Selon un mode de réalisation tel qu'illustré, pour le cordon de soudure 110 qui en est équipé, des nervures élargisseurs N sont disposées de part et d'autre du cordon de soudure 110 par rapport à sa direction d'extension X, ce qui correspond à la direction latérale repérée Y. Il reste toutefois envisageable que les nervures élargisseurs N qui équipent un même cordon de soudure soient toutes agencées d'un même côté du cordon de soudure vu dans la direction Y.

Deux nervures élargisseurs N sont agencées localement perpendiculairement (ce qui est le cas représenté) ou en épi (situation non représentée) par rapport à la direction d'extension X du cordon de soudure 110, dans l'alignement l'une de l'autre, de sorte à constituer un croisillon (figure 2) conjointement avec le cordon de soudure 110 équipé de ces nervures N.

Toutefois, dans une variante non représentée, deux nervures élargisseurs N respectivement s'étendant d'un côté et de l'autre du cordon de soudure 110 suivant la direction Y, sont décalées entre elles le long de la longueur (c'est-à-dire suivant la direction d'extension X) du cordon de soudure 110 selon une organisation en quinconce.

Un dimensionnement possible qui donne une entière satisfaction pour la fonction recherchée, notamment dans le cas d'une première pièce 10 constituée d'une glace et d'une deuxième pièce 11 constituée d'un socle d'un même dispositif de signalisation, prévoit que chaque nervure élargisseur N s'étend sur une longueur L1 (visible sur la figure 3) comprise entre 1,5 mm et 4 mm, préférentiellement entre 1,5 et 2,5 mm, depuis le cordon de soudure 110 d'où elle prend naissance.

Selon un mode préféré, la hauteur H (visible sur la figure 3) de chaque nervure élargisseur N est supérieure ou égale à la hauteur du cordon de soudure 110, ces deux hauteurs étant comptées depuis la face de la pièce 11 à partir de laquelle la nervure élargisseur N prend naissance.

De manière non illustrée, il peut notamment être prévu que chaque nervure élargisseur N soit conformée de sorte que sa hauteur H tende à augmenter en s'éloignant du cordon de soudure 110, permettant de créer une forme d'entonnoir local qui peut participer au centrage (pour mise en place et un maintien du positionnement de l'autre cordon de soudure 100). Toutefois, de la manière illustrée, il est tout à fait envisageable que la hauteur de la nervure élargisseur N soit constante sur sa longueur.

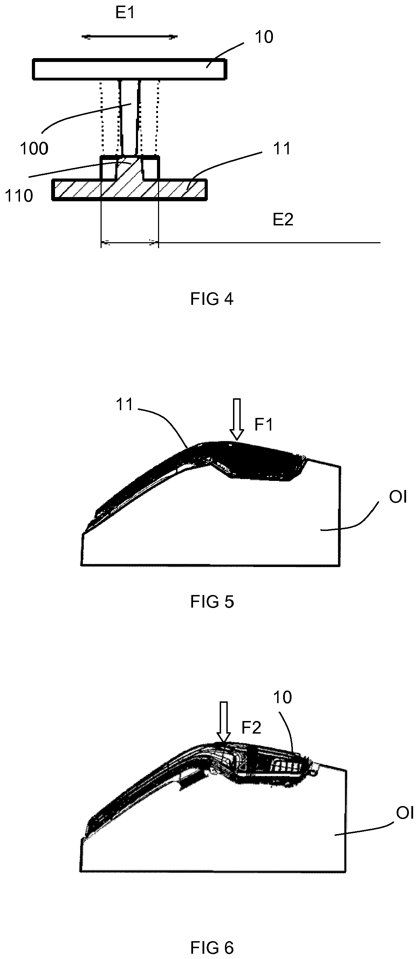

Après l'étape de fourniture des pièces 10, 11, le procédé d'assemblage comprend :
- une première étape de mise en contact F1, F2 (figures 5, 6) des première et deuxième pièces 10, 11 au niveau de leurs cordons de soudure 100, 110, dans laquelle les nervures élargisseurs N de chaque pièce qui en est équipée (ici constituée par la deuxième pièce 11) participent au positionnement du cordon de soudure 100 de l'autre pièce (ici constituée par la première pièce 10) et à la conformation spatiale de ladite autre pièce 10,
- puis une étape de soudure miroir de la première pièce 10 et la deuxième pièce 11 entre elles au niveau de leurs cordons de soudure 100, 110 et des nervures élargisseurs N.

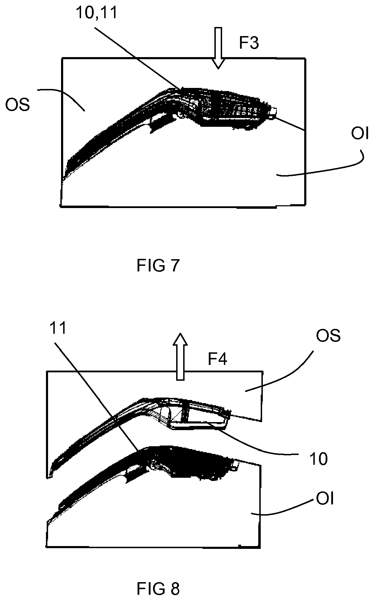

Durant la première étape de mise en contact F1, F2, la pièce 11 dont le cordon de soudure 110 comprend les nervures élargisseurs N est de préférence supportée par un outil inférieur OI (figure 5). L'étape de soudure miroir comprend ensuite une étape de préhension F3 (figure 7) de la pièce 10 pré-centrée durant la première étape de mise en contact F1, F2 par un outil supérieur OS. Le centrage et la conformation spatiale de ladite autre pièce (ici constituée par la première pièce 10) sont très avantageusement maintenus durant l'étape de préhension F3 et grandement facilités par les nervures élargisseurs N de la pièce dont le cordon de soudure 110 en est équipé (ici constituée par la deuxième pièce 11) et sur laquelle elle repose.

Autrement dit, le simple contact de la pièce 10 au niveau de son cordon de soudure 100 contre le cordon de soudure 110 et les nervures élargisseurs N de la pièce 11 qui repose sur l'outil inférieur OI suffit, au moment de la préhension F3 de la pièce 10 par l'outil supérieur OS qui s'accompagne de l'application d'un effort F5 (figure 2) de l'outil supérieur OS sur la pièce 10, à garantir le positionnement et la conformation spatiale de la pièce 10. Ces dispositions sont très avantageuses par rapport à l'art antérieur précédemment présenté.

Selon un mode de réalisation particulier, la première étape de mise en contact F1, F2 comprend une étape de mise en place manuelle de ladite autre pièce (ici constituée par la première pièce 10) sur la pièce (ici constituée par la deuxième pièce 11) dont le cordon de soudure 110 est équipé de nervures élargisseurs N.

Ensuite, l'étape de soudure miroir comprend, suite à l'étape de préhension F3, une étape de déplacement relatif F4 entre les outils supérieur et inférieur OS, OI de sorte à éloigner les première et deuxième pièces 10, 11 l'une de l'autre, une étape de ramollissement au moins partiel ou de fusion au moins partielle de chaque cordon de soudure 100, 110 des première et deuxième pièces 10, 11 par un miroir chauffant, puis une deuxième étape de mise en contact sous pression des première et deuxième pièces 10, 11 au niveau de leurs cordons de soudure 100, 110 encore au moins partiellement ramollis.

Durant l'étape de déplacement relatif, la deuxième pièce 11 dont le cordon de soudure 110 est équipé des nervures élargisseurs N reste solidaire de l'outil inférieur OI tandis que l'autre pièce, ici la première pièce 10 qui est par exemple dépourvue de nervure élargisseur N bien qu'elle pourrait indifféremment en comprendre en complément ou en substitution de celles de la deuxième pièce 11, reste solidaire de l'outil supérieur OS après sa préhension F3 par ce dernier. Le déplacement relatif F4 est par exemple obtenu par un déplacement vers le haut de l'outil supérieur OS alors que l'outil inférieur OI reste fixe. A l'inverse, le déplacement relatif F4 pourrait être obtenu par un déplacement vers le bas de l'outil inférieur OI alors que l'outil supérieur OS resterait fixe. Ces déplacements des outils OI et OS pourraient aussi être combinés.

En résumé, la pièce 11 est d'abord déposée manuellement sur l'outil inférieur OI (flèche F1), puis l'autre pièce 10 est mise en place manuellement sur la pièce 11 (flèche F2) afin de créer une première mise en contact entre les pièces 10, 11, puis la pièce 10 est saisie par l'outil supérieur OS (flèche F3) durant l'étape de préhension, puis la pièce 10 ainsi saisie est déplacée par rapport à la pièce 11 par l'intermédiaire d'au moins l'un des outils OI et OS, puis l'étape de soudure miroir est finalisée moyennant une deuxième mise en contact sous pression des pièces 10, 11 à un moment où les cordons de soudure 110, 100 sont encore à l'état ramolli après chauffage par le miroir ou la lame chauffante.

Les nervures élargisseurs N ajoutées localement dans la largeur du cordon de soudure 110 permettent un pré-positionnement manuel aisé des pièces 10, 11 par l'opérateur. Elles permettent aussi d'accepter les dispersions de fabrication des pièces 10, 11. Les nervures élargisseurs permettent aux deux pièces 10, 11 de glisser l'une par rapport a l'autre, et ainsi de centrer et de conformer la pièce 10 par le biais du procédé de soudure miroir lui-même afin d'assurer un bon positionnement des pièces 10, 11 lors de leur assemblage. La figure 5 schématise la tolérance de glissement E1 des pièces 10, 11 l'une par rapport à l'autre, dans laquelle la pièce 10 est malgré tout maintenue en position de centrage et conformée spatialement via les nervures élargisseurs N de la pièce 11. Cette valeur de E1 est directement liée à la largeur totale E2 du cordon de soudure 110 au niveau des nervures élargisseurs N qui l'équipent et à la largeur du cordon de soudure 100.

Un autre avantage des nervures élargisseurs N est une amélioration de l'ergonomie du poste de travail au sein duquel le procédé d'assemblage est réalisé. Cela permet de charger manuellement la pièce 11, même si elle a un poids élevé, en partie inférieure de la machine (plus précisément sur l'outil inférieur OI) et de positionner la pièce 10 sur cette pièce 11 précédemment chargée. Contrairement à l'art antérieur, il n'y a pas d'effort à exercer pour conformer la pièce 10 et pour fixer la pièce 10 qui est potentiellement lourde au-dessus des épaules de l'opérateur.

Enfin, il s'agit d'une solution adaptable et simple à mettre en place sur divers produits, répétable sur la pièce 11 et/ou la pièce 10.

On comprend bien de la description qui précède que le procédé selon l'invention est particulièrement bien adapté pour la réalisation de feux de signalisation de véhicules, notamment automobiles.

## Revendications

1. Procédé d'assemblage entre elles par soudure miroir d'une première pièce (10) et d'une deuxième pièce (11) d'un dispositif lumineux pour véhicule automobile, comprenant une étape de fourniture des première et deuxième pièces (10, 11) où chaque pièce (10, 11) comprend, dans sa zone d'interface de contact avec l'autre pièce, un cordon de soudure (100, 110) destiné à venir en contact contre le cordon de soudure de l'autre pièce durant la soudure miroir, **caractérisé en ce que** le cordon de soudure (110) d'au moins l'une (11) desdites première et deuxième pièces (10, 11) est muni d'une pluralité de nervures élargisseurs (N) échelonnées le long de la longueur dudit cordon de soudure (110), chaque nervure élargisseur (N) étant configurée de manière à élargir localement la largeur du cordon de soudure (110) par rapport à la largeur (L) du cordon de soudure (110) en dehors des zones où les nervures élargisseurs (N) sont présentes.

2. Procédé d'assemblage selon la revendication 1, **caractérisé en ce que** pour le cordon de soudure (110) qui en est équipé, des nervures élargisseurs (N) sont disposées de part et d'autre du cordon de soudure (110) par rapport à sa direction d'extension (X).

3. Procédé d'assemblage selon la revendication 2, **caractérisé en ce que** deux nervures élargisseurs (N) sont agencées localement perpendiculairement ou en épi par rapport à la direction d'extension (X) du cordon de soudure (110), dans l'alignement l'une de l'autre, de sorte à constituer un croisillon conjointement avec ledit cordon de soudure (110).

4. Procédé d'assemblage selon l'une des revendications 2 ou 3, **caractérisé en ce que** deux nervures élargisseurs (N) respectivement s'étendant d'un côté et de l'autre du cordon de soudure (110) sont décalées entre elles le long de la longueur du cordon de soudure (110) selon une organisation en quinconce.

5. Procédé d'assemblage selon l'une des revendications 1 à 4, **caractérisé en ce que** chaque nervure élargisseur (N) s'étend sur une longueur (L1) comprise entre 1,5 mm et 4 mm depuis le cordon de soudure (110).

6. Procédé d'assemblage selon l'une des revendications 1 à 5, **caractérisé en ce que** la hauteur (H) de chaque nervure élargisseur (N) est supérieure ou égale à la hauteur du cordon de soudure (110), comptées depuis la face de la pièce (11) à partir de laquelle la nervure élargisseur (N) prend naissance.

7. Procédé d'assemblage selon la revendication 6, **caractérisé en ce que** chaque nervure élargisseur (N) est conformée de sorte que sa hauteur (H) tend à augmenter en s'éloignant du cordon de soudure (110).

8. Procédé d'assemblage selon l'une des revendications 1 à 7, **caractérisé en ce qu'**après l'étape de fourniture, il comprend une première étape de mise en contact (F1, F2) des première et deuxième pièces (10, 11) au niveau de leurs cordons de soudure (100, 110), dans laquelle les nervures élargisseurs (N) de chaque pièce (11) qui en est équipée participent au positionnement du cordon de soudure (100) de l'autre pièce (10) et à la conformation spatiale de ladite autre pièce (10), puis une étape de soudure miroir des première pièce (10) et deuxième pièce (11) entre elles au niveau de leurs cordons de soudure (100, 110) et des nervures élargisseurs (N).

9. Procédé d'assemblage selon la revendication 8, **caractérisé en ce que** durant la première étape de mise en contact (F1, F2), la pièce (11) dont le cordon de soudure (110) comprend les nervures élargisseurs (N) est supportée par un outil inférieur (OI) et **en ce que** l'étape de soudure miroir comprend une étape de préhension (F3) de la pièce (10) pré-centrée durant la première étape de mise en contact (F1, F2) par un outil supérieur (OS), le centrage et la conformation spatiale de ladite autre pièce (10) étant obtenus par les nervures élargisseurs (N) de la pièce (11) dont le cordon de soudure (110) en est équipé durant l'étape de préhension (F3).

10. Procédé d'assemblage selon l'une des revendications 8 ou 9, **caractérisé en ce que** la première étape de mise en contact (F1, F2) comprend une étape de mise en place manuelle (F2) de ladite autre pièce (10) sur la pièce (11) dont le cordon de soudure (110) est équipé de nervures élargisseurs (N).

11. Procédé d'assemblage selon l'une des revendications 9 ou 10, **caractérisé en ce que** l'étape de soudure miroir comprend, suite à l'étape de préhension (F3), une étape de déplacement relatif (F4) entre les outils supérieur et inférieur (OS, OI) de sorte à éloigner les première et deuxième pièces (10, 11) l'une de l'autre, une étape de ramollissement au moins partiel de chaque cordon de soudure (100, 110) des première et deuxième pièces (10, 11) par un miroir chauffant, puis une deuxième étape de mise en contact par pression des première et deuxième pièces (10, 11) au niveau de leurs cordons de soudure (100, 110) encore au moins partiellement ramollis.

12. Procédé d'assemblage selon l'une des revendications 1 à 11, **caractérisé en ce que** les première et deuxième pièces (10, 11) sont configurées pour former après la soudure miroir, un dispositif lumineux de type dispositif de signalisation de véhicule automobile, par exemple un feu de signalisation arrière, l'une (11) des première et deuxième pièces (10, 11), notamment la pièce dont le cordon de soudure (110) est équipée des nervures élargisseurs (N), étant constituée par un socle, et l'autre (10) des première et deuxième pièces (10, 11) étant constituée par une glace au moins partiellement transparente à la lumière.

## Patentansprüche

1. Verfahren zum Fügen eines ersten Teils (10) und eines zweiten Teils (11) einer Beleuchtungseinrichtung für Kraftfahrzeuge untereinander durch Spiegelschweißen, umfassend einen Schritt des Bereitstellens der ersten und zweiten Teile (10, 11), wobei jedes Teil (10, 11) in seiner Kontaktgrenzfläche zum anderen Teil eine Schweißraupe (100, 110) umfasst, die dazu bestimmt ist, während des Spiegelschweißens mit der Schweißraupe des anderen Teils in Kontakt zu gelangen, **dadurch gekennzeichnet, dass** die Schweißraupe (110) von mindestens einem (11) der ersten und zweiten Teile (10, 11) mit einer Vielzahl von Expanderrippen (N) versehen ist, die entlang der Länge der Schweißraupe (110) gestaffelt sind, wobei jede Expanderrippe (N) so gestaltet ist, dass sie die Breite der Schweißraupe (110) in Bezug auf die Breite (L) der Schweißraupe (110) außerhalb der Bereiche, in denen die Expanderrippen (N) vorhanden sind, lokal verbreitert.

2. Fügeverfahren nach Anspruch 1, **dadurch gekennzeichnet, dass** Expanderrippen (N) bei der damit ausgestatteten Schweißraupe (110) beidseits der Schweißraupe (110) in Bezug auf deren Ausdehnungsrichtung (X) angeordnet sind.

3. Fügeverfahren nach Anspruch 2, **dadurch gekennzeichnet, dass** zwei Expanderrippen (N) lokal rechtwinklig oder ährenförmig in Bezug auf die Ausdehnungsrichtung (X) der Schweißraupe (110) fluchtend miteinander angeordnet sind, so dass sie gemeinsam mit der Schweißraupe (110) ein Kreuz bilden.

4. Fügeverfahren nach einem der Ansprüche 2 oder 3, **dadurch gekennzeichnet, dass** zwei Expanderrippen (N), die sich jeweils auf der einen und der anderen Seite der Schweißraupe (110) erstrecken, untereinander entlang der Länge der Schweißraupe (110) gemäß einer Zickzackanordnung versetzt sind.

5. Fügeverfahren nach einem der Ansprüche 1 bis 4, **dadurch gekennzeichnet, dass** sich jede Expanderrippe (N) von der Schweißraupe (110) aus über eine Länge (L1) zwischen 1,5 mm und 4 mm erstreckt.

6. Fügeverfahren nach einem der Ansprüche 1 bis 5, **dadurch gekennzeichnet, dass** die Höhe (H) jeder Expanderrippe (N), gerechnet von der Fläche des Teils (11) aus, an der die Expanderrippe (N) ihren Anfangspunkt hat, größer oder gleich der Höhe der Schweißraupe (110) ist.

7. Fügeverfahren nach Anspruch 6, **dadurch gekennzeichnet, dass** jede Expanderrippe (N) so ausgebildet ist, dass ihre Höhe (H) dazu tendiert, mit zunehmender Entfernung von der Schweißraupe (110) zuzunehmen.

8. Fügeverfahren nach einem der Ansprüche 1 bis 7, **dadurch gekennzeichnet, dass** es nach dem Schritt des Bereitstellens einen ersten Schritt des Kontaktierens (F1, F2) der ersten und zweiten Teile (10, 11) an ihren Schweißraupen (100, 110), wobei die Expanderrippen (N) jedes damit ausgestatteten Teils (11) zur Positionierung der Schweißraupe (100) des anderen Teils (10) und zur räumlichen Konfiguration des anderen Teils (10) beitragen, und dann einen Schritt des Spiegelschweißens des ersten Teils (10) und zweiten Teils (11) untereinander an ihren Schweißraupen (100, 110) und den Expanderrippen (N) umfasst.

9. Fügeverfahren nach Anspruch 8, **dadurch gekennzeichnet, dass** während des ersten Schritts des Kontaktierens (F1, F2) das Teil (11), dessen Schweißraupe (110) die Expanderrippen (N) umfasst, durch ein unteres Werkzeug (OI) gestützt wird, und dass der Schritt des Spiegelschweißens einen Schritt des Greifens (F3) des während des ersten Schritts des Kontaktierens (F1, F2) vorzentrierten Teils (10) durch ein oberes Werkzeug (OS) umfasst, wobei das Zentrieren und die räumliche Konfiguration des anderen Teils (10) durch die Expanderrippen (N) des Teils (11), dessen Schweißraupe (110) damit ausgestattet ist, während des Schritts des Greifens (F3) erhalten werden.

10. Fügeverfahren nach einem der Ansprüche 8 oder 9, **dadurch gekennzeichnet, dass** der erste Schritt des Kontaktierens (F1, F2) einen Schritt des manuellen Einrichtens (F2) des anderen Teils (10) an dem Teil (11), dessen Schweißraupe (110) mit Expanderrippen (N) ausgestattet ist, umfasst.

11. Fügeverfahren nach einem der Ansprüche 9 oder 10, **dadurch gekennzeichnet, dass** der Schritt des Spiegelschweißens nach dem Schritt des Greifens (F3) einen Schritt des Bewegens (F4) der oberen und unteren Werkzeuge (OS, OI) relativ zueinander, so dass die ersten und zweiten Teile (10, 11) voneinander entfernt werden, einen Schritt des zumindest teilweisen Erweichens jeder Schweißraupe (100, 110) der ersten und zweiten Teile (10, 11) durch einen Heizspiegel und dann einen zweiten Schritt des Kontaktierens durch Pressen der ersten und zweiten Teile (10, 11) an ihren noch zumindest teilweise erweichten Schweißnähten (100, 110) umfasst.

12. Fügeverfahren nach einem der Ansprüche 1 bis 11, **dadurch gekennzeichnet, dass** die ersten und zweiten Teile (10, 11) so gestaltet sind, dass sie nach dem Spiegelschweißen eine Beleuchtungseinrichtung von der Art einer Signalleuchte eines Kraftfahrzeugs, beispielsweise eine Hecksignalleuchte, bilden, wobei das eine (11) der ersten und zweiten Teile (10, 11), insbesondere das Teil, dessen Schweißraupe (110) mit Expanderrippen (N) ausgestattet ist, aus einem Sockel gebildet ist und das andere (10) der ersten und zweiten Teile (10, 11) aus einer zumindest teilweise lichtdurchlässigen Glasscheibe gebildet ist.

## Claims

1. Method for assembling a first part (10) and a second (11) part of a lighting device for a motor vehicle by mirror welding, comprising a step of supplying the first and second parts (10, 11) wherein each part (10, 11) comprises, in the interface area thereof for contact with the other part, a weld bead (100, 110) intended to come into contact against the weld bead of the other part during the mirror welding, **characterized in that** the weld bead (110) of at least one (11) of said first and second parts (10, 11) is provided with a plurality of expander ribs (N) spread out along said weld bead (110), each expander rib (N) being configured in such a way as to locally expand the width of the weld bead (110) with respect to the width (L) of the weld bead (110) outside the zones where the expander ribs (N) are present.

2. Assembly method according to Claim 1, **characterized in that** for the weld bead (110) having such, expander ribs (N) are arranged on either side of the weld bead (110) in relation to its direction of extension (X).

3. Assembly method according to Claim 2, **characterized in that** two expander ribs (N) are disposed locally perpendicularly or at an angle in relation to the direction of extension (X) of the weld bead (110), being aligned with each other, so as to form a cross together with said weld bead (110).

4. Assembly method according to one of Claims 2 and 3, **characterized in that** two expander ribs (N) respectively extending on either side of the weld bead (110) are offset from each other along the length of the weld bead (110) in a staggered arrangement.

5. Assembly method according to one of Claims 1 to 4, **characterized in that** each expander rib (N) extends for a length (L1) between 1.5 mm and 4 mm from the weld bead (110).

6. Assembly method according to one of Claims 1 to 5, **characterized in that** the height (H) of each expander rib (N) is equal to or greater than the height of the weld bead (110), counting from the face of the part (11) where the expander rib (N) originates.

7. Assembly method according to Claim 6, **characterized in that** each expander rib (N) is conformed such that its height (H) tends to increase in moving away from the weld bead (110).

8. Assembly method according to one of Claims 1 to 7, **characterized in that** after the step of supplying, it involves a first step of making contact (F1, F2) between the first and second parts (10, 11) in the area of their weld beads (100, 110), in which the expander ribs (N) of each part (11) equipped with such are involved in the positioning of the weld bead (100) of the other part (10) and in the spatial conformation of said other part (10), then a step of mirror welding of the first part (10) and second part (11) to each other in the area of their weld beads (100, 110) and the expander ribs (N).

9. Assembly method according to Claim 8, **characterized in that** during the first step of making contact (F1, F2), the part (11) whose weld bead (110) comprises the expander ribs (N) is supported by a lower tool (01) and **in that** the step of mirror welding involves a step of grasping (F3) of the part (10) which has been previously centered during the first step of making contact (F1, F2) by an upper tool (OS), the centering and the spatial conformation of said other part (10) being accomplished by the expander ribs (N) of the part (11) whose weld bead (110) is equipped with such during the grasping step (F3).

10. Assembly method according to one of Claims 8 and 9, **characterized in that** the first step of making contact (F1, F2) involves a step of manual placement (F2) of said other part (10) on the part (11) whose weld bead (110) is equipped with expander ribs (N).

11. Assembly method according to one of Claims 9 and 10, **characterized in that** the step of mirror welding comprises, after the grasping step (F3), a step of relative displacement (F4) between the upper and lower tools (OS, 01) so as to move the first and second parts (10, 11) away from each other, a step of at least partial softening of each weld bead (100, 110) of the first and second parts (10, 11) by a heating mirror, then a second step of making contact by pressing of the first and second parts (10, 11) in the area of their weld beads (100, 110) still at least partially softened.

12. Assembly method according to one of Claims 1 to 11, **characterized in that** the first and second parts (10, 11) are configured to form, after the mirror welding, a lighting device of the signaling device type for a motor vehicle, for example, a rear signal light, one (11) of the first and second parts (10, 11), especially the part whose weld bead (110) is equipped with expander ribs (N), being constituted of a base, and the other (10) of the first and second parts (10, 11) being constituted of an at least partially light-transparent outer lens.
